# EUROPÄISCHE PATENTSCHRIFT

(11) **EP 1 748 207 B1**
(45) Veröffentlichungstag und Bekanntmachung des Hinweises auf die Patenterteilung: **03.12.2008**
(21) Anmeldenummer: 06014521.6
(22) Anmeldetag: 13.07.2006
(51) Int. Cl.: F16D 27/112

(54) **Elektromagnetisch betätigbare Reibscheibenkupplung und Rotor für eine solche Kupplung**
Electrically actuated friction disc clutch and rotor for such a clutch
Embrayage de disque de friction à actionnement électrique et son rotor

(30) Priorität: 29.07.2005 DE 102005036418
(43) Veröffentlichungstag der Anmeldung: 31.01.2007
(73) Patentinhaber: Linnig Trucktec GmbH, 88677 Markdorf (DE)
(72) Erfinder: Jürgensmseyer, Jan, 88677 Markdorf-Ittendorf (DE); Krafft, Rainer, Dr., 88633 Heiligenberg (DE)
(74) Vertreter: Dobler, Markus

(56) Entgegenhaltungen:
- EP-A2- 1 353 051
- DE-A1- 3 033 140
- US-A- 3 712 439

## Beschreibung

Die Erfindung betrifft einen Rotor für eine elektromagnetische betätigbare Reibscheibenkupplung nach dem Oberbegriff des Anspruchs 1 sowie eine elektromagnetisch betätigbare Reibscheibenkupplung nach dem Oberbegriff des Anspruchs 5.

### Stand der Technik

Reibscheibenkupplungen bzw. Rotoren für Reibscheibenkupplungen der einleitend bezeichneten Art sind bereits in unterschiedlichsten Ausführungsformen bekannt. Z.B. aus der DE 30 33 140.

Die Rotoren weisen regelmäßig axial herausstehende Stege auf, die in einer radialen Blickrichtung Magnetumfassungsmittel von Elektromagneten der Reibscheibenkupplung überlappen. Dadurch wird an einem Luftspalt zwischen Magnetumfassungsmittel und Rotorstege ein gewünschter Feldverlauf erreicht.

Häufig werden Rotoren von elektromagnetischen Kupplungen auf Stahlrohlingen hergestellt. Dabei erfolgt zunächst die Herstellung einer sogenannten Vordrehkontur aus dem Stahlrohling. Hierbei können bahnförmige Vertiefungen vorgesehen werden, in welche magnetisch isolierende Materialien, beispielsweise Kupfer, eingeschmolzen werden. In einem Endbearbeitungsprozess des Rotors wird der Rotor durch einen spanabhebenden Prozess auf seine endgültigen Abmaße gebracht.

Diese Vorgehensweise ist vergleichsweise zeitaufwendig und kostenintensiv, da ein erheblicher Werkzeugeinsatz notwendig ist und für die Ausbildung der Stege relativ große Materialvolumina bearbeitet werden müssen.

Des Weiteren sind Rotoren bekannt, die durch Tiefziehen aus einem Blechteil gefertigt werden und darin magnetische Sperrzonen durch Luftspalte ausgebildet sind. Die Herstellung solcher Rotoren ist aufgrund der notwendigen Werkzeuge jedenfalls vergleichsweise aufwendig.

### Aufgabe und Vorteile der Erfindung

Der Erfindung liegt die Aufgabe zugrunde, einen Rotor für eine elektromagnetisch betätigbare zweistufige Reibscheibenkupplung bzw. eine solche Reibscheibenkupplung bereitzustellen, wobei der Rotor sich einfacher und kostengünstiger herstellen lässt und die Reibscheibenkupplung eine vergleichbare Funktionalität gegenüber bekannten Anordnungen besitzt.

Diese Aufgabe wird durch die Merkmale des Anspruchs 1, 5 und 8 gelöst.

In den abhängigen Ansprüchen sind vorteilhafte und zweckmäßige Weiterbildungen der Erfindung aufgezeigt.

Die Erfindung geht zunächst von einem Rotor für eine zweistufige elektromagnetisch betätigbare Reibscheibenkupplung aus, die zwei Elektromagnete und mit dem Rotor in Kontakt bringbare Ankermittel aus magnetisch leitfähigem Werkstoff umfasst, wobei zwischen einem radial äußeren Randbereich und einem radial innenliegenden Zentrumsbereich kein oder zumindest kein wesentlicher axialer Steg am Rotor angeordnet ist, der in der Reibscheibenkupplung angeordnet in den Elektromagnetbereich, vorzugsweise zwischen die Elektromagnete hineinsteht. Der Kern der Erfindung liegt darin dass der Rotor eine Schreibe ist, ohne wesentlicher axial herausstehende Stegabschnitte. Bislang haben Rotoren für zweistufige Kupplungen an dieser Stelle immer einen Steg, der so zwischen die Magnete hineinreicht, dass er in radialer Richtung betrachtet die Magnete bzw. Magnetumfassungsmittel überlappt. Dadurch soll verhindert werden, dass ein Feldverlauf mit zu hohen axialen Kräften entsteht. Denn am Übergang zwischen Magnetumfassungsmittel und Rotorsteg sind durch die überlappende Anordnung die Feldlinien weitgehend radial und nicht axial ausgerichtet. Die Erfinder haben nun erkannt, dass ein axialer Feldverlauf am Übergang von Magnetumfassungsmittel zu Rotor zumindest zwischen einem Nabenbereich und einem radialen Randbereich toleriert werden kann. Das hat den Vorteil, dass der zwischen die Magnete hineinreichende Steg reduziert, im Idealfall ganz entfallen kann. Dadurch können Bearbeitungskosten gesenkt und gleichzeitig durch den Platzzugewinn die Elektromagnete der Reibscheibenkupplung entsprechend vergrößert werden, womit bei gleicher Baugröße die Leistungsfähigkeit der Kupplung steigerbar ist. Um die axialen Feldlinienanteile im Luftspalt zwischen Rotor und Magnetumfassungsmittel nicht zu groß werden zu lassen, wird zum Beispiel durch einen Wellenstummel im Nabenbereich und einen Steg am Rotor im radialen Außenbereich jeweils ein axialer Überlapp mit den Magnetumfassungsmitteln erzeugt.

In der einfachsten Ausführungsform ist der Rotor als eine Scheibe ohne aus der Ebene des Rotors herausstehende wesentliche axiale Stegabschnitte ausgestaltet. Damit vereinfacht sich die Herstellung des Rotors enorm. Insbesondere lassen sich bisher auftretende Materialabfälle deutlich reduzieren.

Der Rotor wird vorzugsweise aus zwar magnetisch leitendem, aber verschleißfestem und härtbarem Material hergestellt. Denn der Rotor muss beim Schalten der Kupplung der Reibbeanspruchung zu den Ankermitteln widerstehen können.

Sofern am Rotor zum Beispiel im radial äußeren Randbereich ein insbesondere kreisringförmiger Steg vorgesehen ist, wird dieser vorzugsweise nicht einstückig mit dem Rotor ausgebildet, sondern an den Rotor angesetzt. Damit kann auch ein anderes Material für den Steg, zum Beispiel ein magnetisch höher leitendes Material verwendet werden. Zudem wird die Herstellung der Rotorgrundplatte dadurch nicht aufwändiger.

Ein radial umlaufender Steg kann beispielsweise als Riemenscheibe für den Antrieb des Rotors unmittelbar genutzt werden. Im Zentrumsbereich kann ebenso wie für den äußeren Steg eine Nabe bzw. Wellenstummel angesetzt werden. In einer vereinfachten Ausführungsform wird eine Nabenhülse jedoch nur an den Rotor angelegt, also reibschlüssig mit dem Rotor verbunden.

Der beschriebene Rotor wird vorzugsweise in einer elektromagnetisch betätigbaren zweistufigen Reibscheibenkupplung mit zwei radial nacheinander angeordneten kreisringförmigen Elektromagneten, Magnetumfassungsmittel, die die Elektromagnete teilweise umfassen sowie mit dem Rotor in Kontakt bringbare Ankermittel, aus vorzugsweise magnetisch leitfähigem Material eingesetzt.

Im Weiteren ist es besonders bevorzugt, wenn zwischen den Elektromagneten die Magnetumfassungsmittel in Form eines vorzugsweise einzigen axial verlaufenden kreisringförmigen Stegs ausgebildet sind, der zumindest keinen wesentlichen axialen Überlapp mit einem Rotorabschnitt besitzt, der aus der Ebene des Rotors heraussteht. Diese Ausgestaltung der Magnetumfassungsmittel erlaubt, wie oben bereits erläutert, durch den Wegfall eines Überlappungsbereichs und damit eines Stegs des Rotors aufgrund des Raumzugewinns eine Vergrößerung der Elektromagnete. Außerdem lässt sich bis zum Rotor das magnetische Feld in den Magnetumfassungsmitteln aus magnetisch hoch leitendem Material verlustfreier führen.

Um dennoch einen Überlappungsbereich mit axial verlaufender Überlappungsfläche zwischen Rotor und Magnetumfassungsmittel zu erreichen, kann der Rotor eine Nut aufweisen, in welcher der axial verlaufende Steg zwischen dem Elektromagneten hineinreicht. Dadurch lässt sich eine durch das Magnetfeld verursachte Axialkraft zumindest teilweise im Vergleich zu einer in axialer Richtung betrachteten stumpfen Luftspaltstelle zum Rotor reduzieren.

Ein wesentlicher weiterer Aspekt der Erfindung liegt auch darin, dass die Magnetumfassungsmittel am radial äußeren Rand sich axial derart in Richtung Rotor erstrecken, dass die Magnetumfassungsmittel den Rotor in radialer Richtung betrachtet, also axial überdecken, ohne diesen zu berühren.

Durch diese Vorgehensweise kann ein radial außen liegender Steg am Rotor vermieden werden, falls dieser aus anderen konstruktiven Gründen nicht erforderlich ist, aber dennoch eine weitgehend radialer Feldlinienverlauf im Luftspalt zum Rotor erreicht werden. Damit kann der Rotor scheibenförmig ohne axiale Stege unmittelbar aus einem Flachmaterial hergestellt werden.

### Zeichnungen

Zwei Ausführungsbeispiele der Erfindung sind in den Zeichnungen dargestellt und werden nachfolgend unter Angabe weiterer Vorteile und Einzelheiten näher erläutert.

Es zeigen
- Figur 1: in einer perspektivischen Schnittansicht eine erste Reibscheibenkupplung mit den wesentlichen Elementen und
- Figur 2: eine zweite Ausführungsform einer Reibscheibenkupplung in entsprechender Darstellung wie in Figur 1.

### Beschreibung der Ausführungsbeispiele

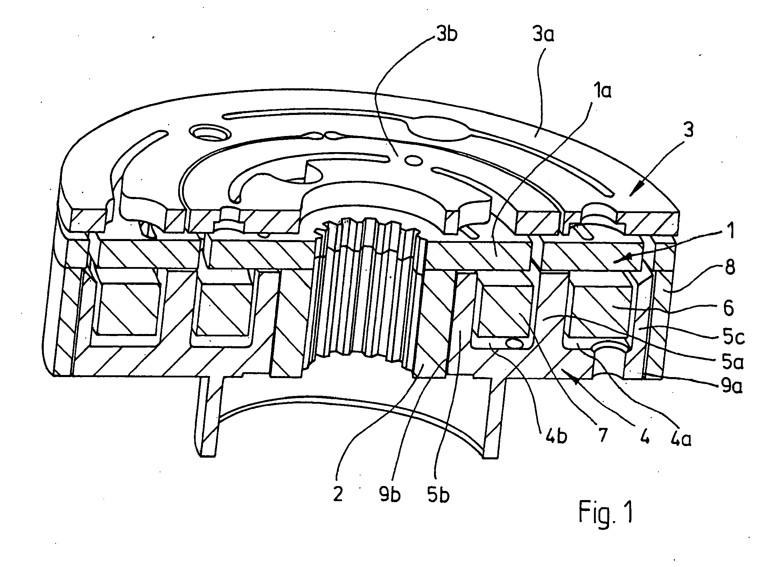

In Figur 1 sind die wesentlichen Teile einer Reibscheibenkupplung abgebildet. Diese umfassen einen Rotor 1, dem eine Ankerscheibe 3 räumlich gegenüberliegt. Der Rotor besitzt einen Wellenabschnitt 2, der vorzugsweise nur reibschlüssig mit einer Rotorscheibe 1a verbunden ist. Am radial äußeren Rand umfasst der Rotor ferner einen axial verlaufenden kreisringförmigen Steg 8. Der Steg 8 ist vorzugsweise nicht einstückig mit der Rotorscheibe 1a ausgebildet, sondern an die Rotorscheibe 1a angesetzt, zum Beispiel durch Schweißen, insbesondere Laserschweißen. Zwischen dem Wellenabschnitt 2 und dem Steg 8 ist ein Magnetumfassungskörper 4 vorgesehen, in dessen beiden kreisringförmigen Nutbereichen 4a, 4b Magnetspulen 6, 7 angeordnet sind.

Damit eine zweistufige Reibscheibenkupplung entsteht, ist die Ankerscheibe 3 in zwei kreisringförmige Abschnitte 3a, 3b aufgeteilt, die bei entsprechender Bestromung gegen die Rotorscheibe 1a gezogen werden. Ist die Magnetspule 6 eingeschaltet, wird der Ankerscheibenabschnitt 3a gegen die Rotorscheibe 1a gezogen. Für den Fall, dass die Magnetspule zugeschaltet ist, wird der Ankerscheibenabschnitt 3b gegen die Rotorscheibe 1a gezogen. Dabei gehen die Ankerscheibenabschnitte 3a, 3b jeweils einen Reibschluss mit der Rotorscheibe 1a ein.

Damit die Reibscheibenkupplung effektiv arbeiten kann, ist es erforderlich, das magnetische Feld möglichst verlustfrei auf eine gewünschte Bahn zu bringen.

Während die Rotorscheibe 1a ebenso wie die Ankerscheibe 3 aus einem magnetisch leitenden, verschleißfestem und härtbarem Material besteht, besteht der Wellenstummel 2 und der Steg vorzugsweise aus einem magnetisch ausgezeichnet leitenden Material. Ebenfalls aus einem magnetisch ausgezeichnet leitenden Material besteht der Magnetumfassungskörper 4 mit Stegen 5a, 5b, 5c, die jeweils bis an die Rotorscheibe 1a heranreichen, aber diese nicht berühren, damit eine Relativbewegung zwischen dem Rotor 1 und dem Magnetumfassungskörper 4 möglich ist.

Damit axial ausgerichtete Feldlinienanordnungen an einem Luftspaltübergang 9a, 9b vermieden werden, weist der Rotor 1 mit dem Magnetumfassungskörper 4 an diesen Stellen einen axialen Überlappungsbereich auf, das heißt in radialer Richtung betrachtet, ist eine Überdeckungsfläche realisiert. Hierzu dienen dem der Magnetumfassungskörper die axialen Stege 5b, 5c und am Rotor 1 der Wellenabschnitt 2 sowie der angesetzte Steg 8.

Lediglich ein Steg 5a des Magnetumfassungskörpers 4 grenzt in axialer Richtung betrachtet stumpf an die Rotorscheibe 1a an. Hierdurch werden zwar Axialkräfte von den Magnetspulen auf den Rotor 1 übertragen, es hat sich jedoch herausgestellt, dass diese toleriert werden können.

Durch Vermeidung eines axialen Steges am Rotor 1, der zwischen die Magnetspulen 6, 7 hineinreicht, wird der Aufbau des Rotors 1 deutlich einfacher. Zudem ergibt sich ein Raumgewinn, der für größere Magnetspulen 6, 7 nutzbar ist, was die Leistungsfähigkeit der Reibscheibenkupplung erhöht. Durch das Ansetzen des Steges 8 aus vorzugsweise einem anderen Material wie die Rotorscheibe 1a, kann die Rotorscheibe vergleichsweise einfach aus Flachmaterial hergestellt werden. Materialabfall kann auf diese Weise auf ein minimales Maß reduziert werden.

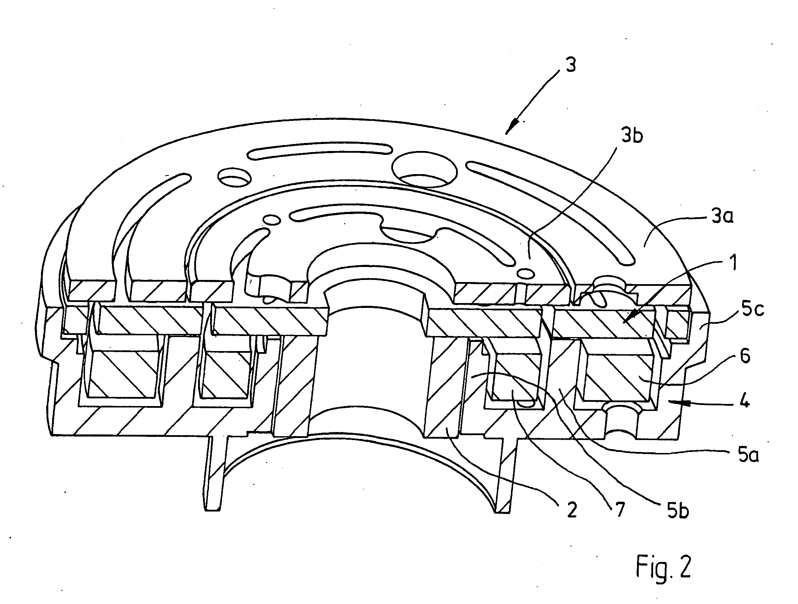

In Figur 2 ist eine weitere Variante einer Reibscheibenkupplung in entsprechender Darstellung wie in Figur 1 abgebildet. Entsprechende Teile der Reibscheibenkupplung sind mit gleichen Bezugszeichen wie in Figur 1 versehen.

Der Unterschied in den Ausführungsformen liegt darin, dass in der Reibscheibenkupplung in Figur 2 der Steg 8 des Rotors 1 nicht vorhanden ist. Dadurch reduziert sich eine Struktur des Rotors auf die Rotorscheibe 1a. Um jedoch eine möglichst radiale Feldlinienübergabe vom Magnetumfassungskörper 4 auf die Rotorscheibe 1a zu gewährleisten, ist der Steg 5c des Magnetumfassungskörpers soweit hochgezogen, dass die radiale Stirnfläche der Rotorscheibe 1a vom Steg 5c abgedeckt ist. Der Steg 5c ist dabei so ausgeformt, dass ein Luftspalt zwischen Rotorscheibe 1a und Steg 5c entsteht, um eine berührungsfreie Relativbewegung zwischen der Rotorscheibe 1a und dem Magnetumfassungskörper 4 zu gewährleisten.

## Patentansprüche

1. Rotor für eine zweistufige, elektromagnetisch betätigbare Reibscheibenkupplung, die zwei Elektromagnete (6, 7) und mit dem Rotor (1) in Kontakt bringbare Ankermittel (3) aus magnetisch leitfähigem Werkstoff umfasst, wobei zwischen einem radial äußeren Rand und einem radial innenliegenden Zentrumsbereich am Rotor (1) kein oder zumindest kein wesentlicher axialer Steg vorhanden ist, der in der Reibschaltkupplung angeordnet in den Elektromagnetbereich hineinsteht, **dadurch gekennzeichnet, dass** der Rotor eine Scheibe (1a) ist, ohne wesentliche axial herausstehende Stegabschnitte.

2. Rotor nach Anspruch 1, **dadurch gekennzeichnet, dass** der Rotor (1) aus magnetisch leitendem, aber verschleißfestem und härtbarem Material besteht.

3. Rotor nach einem der vorhergehenden Ansprüche, **dadurch gekennzeichnet, dass** der Rotor (1) einen reibschlüssig verbundenen Wellenstummel (2) beinhaltet.

4. Rotor nach einem der vorhergehenden Ansprüche, **dadurch gekennzeichnet, dass** ein radial außen liegender Steg (8) an den Rotor (1) angesetzt ist.

5. Elektromagnetisch betätigbare, insbesondere zweistufige Reibscheibenkupplung mit wenigstens einem Elektromagneten, vorzugsweise zwei radial nacheinander angeordneten kreisringförmigen Elektromagneten (6, 7), Magnetumfassungsmittel (4), die den wenigstens einen Elektromagneten (6, 7) teilweise umfassen, einem antreibbaren Rotor (1) sowie mit dem Rotor (1) in Kontakt bringbare Ankermittel (3), **dadurch gekennzeichnet, dass** der Rotor (1) nach einem der vorhergehenden Ansprüche ausgebildet ist.

6. Reibschaltkupplung nach Anspruch 5, **dadurch gekennzeichnet, dass** zwischen den Elektromagneten (6, 7) die Magnetumfassungsmittel (4) in Form eines axial herausstehenden kreisringförmig verlaufenden Stegs (5a) ausgebildet sind, der zumindest keinen wesentlichen axialen Überlapp mit einem Rotorabschnitt besitzt, der aus der Ebene des Rotors (1) heraussteht.

7. Reibschaltkupplung nach Anspruch 5 oder 6, **dadurch gekennzeichnet, dass** der Rotor (1) eine Nut aufweist, in welche der axial verlaufende Steg (5a) zwischen den Elektromagneten (6, 7) hineinreicht.

8. Reibschaltkupplung mit einem Rotor für eine zweistufige, elektromagnetisch betätigbare Reibscheibenkupplung, die zwei Elektromagnete (6, 7), Magnetumfassungsmittel, welche die Elektromagnete teilweise umfassen, und mit dem Rotor (1) in Kontakt bringbare Ankermittel (3) aus magnetisch leitfähigem Werkstoff umfasst, insbesondere nach den Ansprüchen 5, 6 und 7, **dadurch gekennzeichnet, dass** die Magnetumfassungsmittel (4) am radial äußeren Rand sich axial derart in Richtung Rotor (1) erstrecken, dass die Magnetumfassungsmittel (4) den Rotor (1) in radialer Richtung betrachtet überdecken, ohne diesen zu berühren.

## Claims

1. Rotor for a two-stage, electromagnetically operated friction disc clutch, which comprises two electromagnets (6, 7) and armature means (3) which can be brought into contact with the rotor (1) and are made from a magnetically conducting material, wherein no axial web, or at least no substantial axial web, is provided between a radially outer edge and a radially inner central area on the rotor (1), which web arranged in the friction clutch projects into the electromagnet area, **characterised in that** the rotor is a disc (1a), without substantial axially projecting web sections.

2. Rotor according to claim 1, **characterised in that** the rotor (1) is made of magnetically conducting but wear-resistant and hardening material.

3. Rotor according to one of the preceding claims, **characterised in that** the rotor (1) contains a frictionally connected shaft stub (2).

4. Rotor according to one of the preceding claims, **characterised in that** a radially outer web (8) is attached to the rotor (1).

5. Electromagnetically operated, in particular two-stage, friction disc clutch with at least one electromagnet, preferably two annular electromagnets (6, 7) which are arranged consecutively in radial direction, magnet-surrounding means (4), which partially surround the at least one electromagnet (6, 7), a rotor (1) which can be driven as well as armature means (3) which can be brought into contact with the rotor (1) **characterised in that** the rotor (1) is designed according to one of the preceding claims.

6. Friction clutch according to claim 5, **characterised in that** between the electromagnets (6, 7) the magnet-surrounding means (4) are in the form of an axially protruding annular web (5a), which web at least has no substantial axial overlap with a rotor section which projects out of the plane of the rotor (1).

7. Friction clutch according to claim 5 or 6, **characterised in that** the rotor (1) has a groove, into which the axially running web (5a) extends between the electromagnets (6, 7).

8. Friction clutch with a rotor for a two-stage, electromagnetically operated friction disc clutch, which comprises two electromagnets (6, 7), magnet-surrounding means (4), which partially surround the electromagnets, and armature means (3) which can be brought into contact with the rotor (1) and are made from a magnetically conducting material, in particular according to claims 5, 6 and 7, **characterised in that** the magnet-surrounding means (4) on the radially outer edge extend axially in the direction of the rotor (1) in such a way that the magnet-surrounding means (4) cover the rotor (1), as viewed in radial direction, without touching the latter.

## Revendications

1. Rotor pour un accouplement à disques de friction à deux étages et à commande électromagnétique qui comprend deux électro-aimants (6, 7) et des dispositifs d'induits (3) en matériau magnétiquement conducteur pouvant être amenés en contact avec le rotor (1), aucune entretoise ou au moins aucune entretoise sensiblement axiale agencée dans l'embrayage à friction et entrant dans la zone d'électro-aimant n'étant présente entre un bord extérieur dans le sens radial et une zone centrale située à l'intérieur dans le sens radial sur le rotor (1),
**caractérisé en ce que** le rotor est un disque (1a) sans segments d'entretoise sortant sensiblement dans le sens axial,

2. Rotor selon la revendication 1,
**caractérisé en ce que** le rotor (1) est fabriqué dans un matériau magnétiquement conducteur, mais résistant à l'usure et apte au traitement de trempe et de revenu.

3. Rotor selon l'une des revendications précédentes,
**caractérisé en ce que** le rotor (1) comporte un embout d'arbre (2) relié par friction.

4. Rotor selon l'une des revendications précédentes,
**caractérisé en ce qu'**une entretoise (8) située à l'extérieur dans le sens radial est fixée sur le rotor (1).

5. Accouplement à disques de friction à commande électromagnétique, notamment à deux étages, comportant au moins un électro-aimant, de préférence deux électro-aimants (6, 7) de forme annulaire agencés l'un à la suite de l'autre dans le sens radial, des dispositifs d'entourage d'aimant (4) qui entourent partiellement le au moins un électro-aimant (6, 7), un rotor (1) pouvant être commandé ainsi que des dispositifs d'induits (3) pouvant être amenés en contact avec le rotor (1),
**caractérisé en ce que** le rotor (1) est réalisé suivant l'une des revendications précédentes.

6. Embrayage à friction selon la revendication 5,
**caractérisé en ce que,** entre les électro-aimants (6, 7), les dispositifs d'entourage d'aimant (4) sont réalisés sous la forme d'une nervure (5a) s'étendant de façon annulaire et dépassant dans le sens axial, laquelle ne possède au moins aucun recouvrement axial essentiel avec une partie de rotor qui dépasse du plan du rotor (1).

7. Embrayage à friction selon la revendication 5 ou 6,
**caractérisé en ce que** le rotor (1) présente une rainure dans laquelle pénètre la nervure (5a) s'étendant dans le sens axial entre les électro-aimants (6, 7).

8. Embrayage à friction avec un rotor pour un accouplement à disques de friction à deux étages et à commande électromagnétique qui comprend deux électro-aimants (6, 7), des dispositifs d'entourage d'aimant, lesquels entourent partiellement les électro-aimants, et des dispositifs d'induits (3) en matériau magnétiquement conducteur pouvant être amenés en contact avec le rotor (1), notamment suivant les revendications 5, 6 et 7,
**caractérisé en ce que** les dispositifs d'entourage d'aimant (4) sur le bord extérieur dans le sens radial s'étendent axialement en direction du rotor (1) de telle façon que les dispositifs d'entourage d'aimant (4) recouvrent le rotor (1), vu dans le sens radial, sans toucher celui-ci.
